# EUROPÄISCHE PATENTSCHRIFT

(11) **EP 2 350 156 B1**
(45) Veröffentlichungstag und Bekanntmachung des Hinweises auf die Patenterteilung: **11.12.2013**
(21) Anmeldenummer: 09736917.7
(22) Anmeldetag: 14.10.2009
(51) Int. Cl.: C04B 26/14, C04B 26/16, E02B 3/12, E02B 3/14, C08G 18/28, C08G 18/38, C09D 175/04, C09J 175/04, C04B 41/48, C08G 18/10, C08G 18/12

(54) **VERFAHREN ZUM BESCHICHTEN, VERKLEBEN UND VERBINDEN MINERALISCHER OBERFLÄCHEN**
METHOD FOR COATING, GLUING AND CONNECTING MINERAL SURFACES
PROCÉDÉ POUR ENDUIRE, COLLER ET RELIER DES SURFACES MINÉRALES

(30) Priorität: 17.10.2008 EP 08166887
(43) Veröffentlichungstag der Anmeldung: 03.08.2011
(73) Patentinhaber: BASF SE, 67056 Ludwigshafen (DE)
(72) Erfinder: ALEMDAROGLU, Fikri Emrah, 49448 Stemshorn (DE); HAGEN, Christian, 49448 Lemförde (DE); LEBERFINGER, Marcus, 49124 Georgsmarienhütte (DE)
(86) Internationale Anmeldenummer: PCT/EP2009/063397
(87) Internationale Veröffentlichungsnummer: WO 2010/043644

(56) Entgegenhaltungen:
- EP-A1- 1 801 138
- EP-A1- 1 867 693
- WO-A1-2007/104659
- DE-A1-102005 027 551
- US-A- 3 886 226

## Beschreibung

Die Erfindung betrifft ein Verfahren zur Beschichtung, zum Verkleben oder Verbinden von Oberflächen mineralischer Materialien mit einem Kunststoffharz, vorzugsweise mit einem 2-Komponenten-Kunststoffharz.

Die Befestigung von Ufern, insbesondere von Uferböschungen, ist für die Regulierung von fließenden Gewässern häufig notwendig. Auch beim Neubau und insbesondere bei der Sanierung von Wasserstraßen und Deichen muss zumeist eine Befestigung von Bereichen des Ufers erfolgen.

Bisher wurden für solche Sanierungszwecke Verbundkörper aus Schotter und hochwertigem Beton vorgefertigt und am Einsatzort platziert. Bei diesem Verfahren ist jedoch eine Sanierung von beschädigten Bereichen des Ufers an Ort und Stelle nicht möglich. Außerdem haben die Bauteile zumeist ein sehr hohes Gewicht. Ein weiterer Nachteil von Beton ist dessen fehlende Elastizität und Porosität. Dies führt dazu, dass der Beton keine Spannungen verkraftet und sich diese Verbunde leicht lösen.

Eine Möglichkeit der Sanierung von beschädigten Bereichen des Ufers an Ort und Stelle besteht in der Verwendung von härtenden Teerformulierungen oder Flüssigbetonen oder Flüssigmörteln, die über den zu verfestigenden Gesteinsschotter der Uferböschungen ausgetragen wurden. Mit diesem Verfahren kann für eine gewisse Zeit eine Verfestigung der Uferböschungen erreicht werden. Es tritt jedoch vor allem der ökologische Nachteil auf, dass im Laufe der Zeit phenolische oder andere umweltschädliche Verbindungen aus dem Teer freigesetzt werden können.

Die Verwendung von Polyurethanen zur Herstellung von Formkörpern mit mineralischen Inhaltsstoffen sowie zur Befestigung von Gesteinsschichten, insbesondere im Bergbau, ist ebenfalls bekannt. In einer Ausführungsform dieses Verfahrens werden Formkörper hergestellt, indem Gestein, vorzugsweise Schotter, in eine Form eingebracht und darauf das flüssige Reaktionsgemisch der Ausgangskomponenten des Polyurethans aufgebracht wird. Die nach dem Aushärten entstehenden Formkörper können auf der Uferböschung platziert werden.

WO 2006/134136 beschreibt ein Verfahren, bei dem in einem ersten Schritt in einer Mischvorrichtung die flüssigen Ausgangskomponenten eines 2-Komponenten-Kunststoffs mit Steinen vermischt und in einem zweiten Schritt diese Mischung auf den zu befestigenden Uferabschnitt oder an zumindest teilweise in bewegten Gewässern befindlichen Bauwerken, wie Stütz- und Konstruktionselementen, ausgebracht wird, oder die Mischung in eine Form gegeben wird, wo der Kunststoff aushärtet. Als Kunststoff wird ein kompaktes hydrophobes Polyurethan eingesetzt, welches durch Umsetzung von Polyisocyanaten mit einer Polyolkomponente erhältlich ist, wobei die Polyolkomponente ein fettchemisches Polyol und ein mit Phenol modifiziertes aromatisches Kohlenwasserstoffharz, vorzugsweise ein mit Phenol modifiziertes Inden-Cumaron-Harz enthält.

Nachteilig an diesem Verfahren ist, dass nur bestimmte Steinsorten, die eine niedrige Oberflächenspannung und eine niedrige Wasseraufnahme aufweisen, verklebt werden können. Beispiele sind Basalt oder Kalkstein. Steinsorten mit einer hohen Oberflächenspannung und einer hohen Wasseraufnahme, wie Granit, können nicht verklebt werden.

WO 2006/134147 beschreibt ein Verfahren, bei dem man Ufer, Abhänge, Böschungen oder Bauwerke durch Verbunde aus einem Epoxyharz und losen mineralischen Partikeln befestigt und sichert. So können in einem ersten Schritt in einer Mischvorrichtung die flüssigen Ausgangskomponenten eines Epoxydharzes mit mineralischen Partikeln vermischt und in einem zweiten Schritt diese Mischung auf den zu befestigenden Uferabschnitt oder an die zumindest teilweise in bewegten Gewässern befindlichen Bauwerke, wie Stütz- und Konstruktionselemente, ausgebracht werden. Weiterhin lehrt diese WO, die Mischung des Epoxydharzes mit mineralischen Partikeln in eine Form zu geben und das Epoxydharz aushärten zu lassen. Der erhaltene Formkörper wird dann auf den zu befestigenden Uferabschnitt oder an die zumindest teilweise in bewegten Gewässern befindlichen Bauwerke, wie Stütz- und Konstruktionselemente, angebracht. Ein Aushärten der Mischungen aus Harz und mineralischen Partikeln unter Wasser wird nicht beschrieben.

Die Außenwände von Bauwerken unterliegen mit der Zeit der Alterung. Durch Umwelteinflüsse, aber auch durch Beschädigung, wie Graffiti, werden die Gebäude mit der Zeit unansehnlich. So müssen im Bereich von Fassadenreinigung, Denkmalpflege und Natursteinrestaurierung häufig Verunreinigungen auf sensiblen Untergründen entfernt werden. Dies geschieht bei großen Flächen üblicherweise durch Wasser-, vorzugsweise jedoch durch Sandstrahlen. Um zu verhindern, dass es zu einer erneuten raschen Verunreinigung der Oberflächen kommt, können die Oberflächen nach der Bestrahlung versiegelt werden

Die WO 2007/104659 beschreibt ein Verfahren bei dem die Oberfläche zunächst vorzugsweise durch Wasser- oder insbesondere Sandstrahlen von Verunreinigungen befreit und danach ein kompaktes hydrophobes Polyurethan auf Basis aliphatischer Polyisocyanate auf die Oberfläche aufgebracht wird. Die Hydrophobie der eingesetzten Polyurethane wird durch Zusatz von hydroxylfunktionellen fettchemischen Komponenten zur Polyolkomponente des Polyurethansystems bewirkt. Vorzugsweise enthält diese noch ein mit Phenol modifiziertes aromatisches Kohlenwasserstoffharz, insbesondere ein Inden-Cumaron-Harz. Weiterhin benötigt das Polyurethansystem zum Aushärten einen Katalysator, beispielsweise einen Amin- oder einen Metallkatalysator, beispielsweise auf Basis von Zinn, Zink oder Bismut.

Nachteilig an diesem Verfahren ist, dass Polyurethanharze auf Basis von aliphatischen Polyisocyanaten eine niedrige Festigkeit und mechanische Stabilität aufweisen.

DE 10 2005 027 551 A1 offenbart ein Verfahren zur Herstellung eines Verbundstoffes aus Steinen, insbesondere Schotter, und einem Kunststoff, insbesondere einem kompakten Polyurethan, der insbesondere bei der Befestigung von Ufern oder von zumindest teilweise in bewegten Gewässern befindlichen Bauwerken, wie Stütz- und Konstruktionselementen, eingesetzt werden kann. Es wird das Vorliegen von nassen Steinen und sogar unter Wasser, und das Erzielen einer guten Haftung zwischen dem Polyurethan und den Steinen beschrieben.

Aufgabe der Erfindung ist es, ein Verfahren zur Beschichtung, zum Verkleben oder Verbinden von Oberflächen mineralischer Materialien mit einem Kunststoffharz, vorzugsweise einem 2-Komponenten-Kunststoffharz durch Aufbringen des Kunststoffharzes auf die Oberfläche oder Verbinden der Oberflächen der mineralischen Materialien mit dem Kunststoffharz und Aushärten lassen des Kunststoffharzes bereitzustellen, bei dem das vollständige Aushärten des Kunststoffharzes auch unter Wasser erfolgen kann. Aufgabe ist es insbesondere, ein solches Verfahren bereitzustellen, das für alle Arten von Mineralien geeignet ist, also auch für solche mit hoher Oberflächenspannung und Wasseraufnahme, wie beispielsweise Granit.

Gelöst wird die Aufgabe durch ein Verfahren zur Beschichtung, zum Verkleben oder Verbinden von Oberflächen mineralischer Materialien mit einem 2-Komponenten-Kunststoffharz, ausgewählt aus einem hydrophoben Polyurethanharz und einem hydrophoben Epoxyharz, durch Aufbringen des Kunststoffharzes auf die Oberfläche oder Verbinden der Oberflächen der mineralischen Materialien mit dem Kunststoffharz und Aushärten lassen des Kunststoffharzes, dadurch gekennzeichnet, dass das Kunststoffharz 0,01 bis 10 Gew.% einer oder mehrerer Hydroxy- oder Alkoxyaminosilanverbindungen der allgemeinen Formel (I) 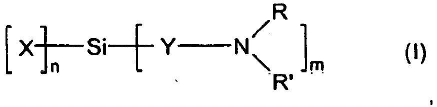 worin bedeuten:
X unabhängig voneinander OH, CH₃, O[CH₂]ₚCH₃;
Y [CH₂]ₜ, [CH₂]ᵣNH[CH₂]ₛ;
R, R' H, [CH₂]ₜCH₃;
t 0 - 10;
n 1 - 3;
p 0-5;
m 4-n;
r, s unabhängig voneinander 1 -10,
enthält, wobei das 2-Komponenten-Kunststoffharz ein hydrophobes Polyurethanharz ist, das durch Vermischen einer Polyisocyanatkomponente (i) mit einer Polyolkomponente (ii) erhältlich ist, die Polyolkomponente (ii) eines oder mehrere fettchemische Polyole enthält, welche aus tierischen oder pflanzlichen Fetten und Ölen erhältlich sind, und die Alkoxyaminosilanverbindung in der Polyolkomponente (ii) enthalten ist.

Im Allgemeinen ist die Alkoxyaminosilanverbindung (I) eine Trihydroxy-, Dialkoxy- oder Trialkoxyaminosilanverbindung. Bevorzugte Alkoxyreste X sind Methoxy und Ethoxy. Die Aminogruppe muss eine mit Isocyanatgruppen reaktive Aminogruppe, also eine primäre oder sekundäre Aminogruppe sein. Bevorzugte Alkylreste R sind Wasserstoff, Methyl und Ethyl.

Bevorzugt handelt es sich bei der Alkoxyaminosilanverbindung (I) um eine Trihydroxyaminosilanverbindung oder um eine Trialkoxyaminosilanverbindung, wobei in Formel (I) X = OH oder O[CH₂]ₒCH₃ und p = 0, 1 bedeuten.

Weiterhin bevorzugt handelt es sich bei der Alkoxyaminosilanverbindung (I) um eine Alkoxydiaminosilanverbindung, wobei in Formel (I) Y = [CH₂]ᵣNH[CH₂]ₛ und r, s, gleich oder verschieden, 1, 2 bedeuten. Beispiele sind [CH₂]₃NH[CH₂]₂, [CH₂]₂NH[CH₂]₂, [CH₂]NH[CH_{2]}, [CH₂]₃NH[CH₂]₃, [CH₂CH(CH₃)CH₂]NH[CH₂]₂ und [CH₂]₂NH[CH₂]₃.

Insbesondere handelt es sich bei der Alkoxyaminosilanverbindung (I) um eine Trialkoxydiaminosilanverbindung, wobei in Formel (I) X = O[CH₂]ₚCH₃ mit p = 0, 1 und Y = [CH₂]ᵣNH[CH₂]ₛ mit r, s, gleich oder verschieden, 1, 2 bedeuten.

Besonders bevorzugte Alkoxyaminosilanverbindungen (I) sind 3-Triethoxysilylpropylamin, N-(3-Trihydroxysilylpropyl)ethylendiamin, N-(3-Trimethoxysilylpropyl)ethylendiamin und N-(3-Methyldimethoxymethylsilyl-2-methylpropyl)ethylendiamin.

Die 2-Komponenten-Kunststoffe werden aus flüssigen Ausgangskomponenten hergestellt und härten zu festen Kunststoffen aus. Vorzugsweise sind die Kunststoffe kompakt, das heißt, sie enthalten praktisch keine Poren. Gegenüber zelligen Kunststoffen zeichnen sich kompakte Kunststoffe durch eine größere mechanische Stabilität aus. Blasen innerhalb des Kunststoffs können auftreten und sind zumeist unkritisch. Sie sollten jedoch möglichst minimiert werden.

Weiterhin sind die Kunststoffe hydrophob. Damit wird ein Abbau der Kunststoffe durch das Wasser unterdrückt.

Der Gehalt der Alkoxyaminosilanverbindung (I) in dem Polyurethanharz beträgt 0,05 bis 80 Gew.-%, vorzugsweise 0,075 bis 10 Gew.-%, und insbesondere 0,01 bis 0,2 Gew.-%.

Im Allgemeinen bewirkt die Alkoxyaminosilanverbindung (I) eine Anbindung des hydrophoben Harzes an die hydrophile Oberfläche der Mineralien. Die Anbindung an die Mineral-oberfläche wird dabei durch Silanol-Gruppen, die durch Hydrolyse der Alkoxyaminosilane gebildet werden; bewirkt. Die Anbindung an das Harz wird durch die reaktive Aminogruppe des Alkoxyaminosilans bewirkt.

Aufbaukomponenten der Polyurethane sind Verbindungen mit freien Isocyanatgruppen (Polyisocyanate (i)) und Verbindungen mit Gruppen, die mit Isocyanatgruppen reaktiv sind. Letztere werden nachfolgend auch als Polyolkomponente (ii) bezeichnet. Gruppen, die mit Isocyanatgruppen reaktiv sind, sind insbesondere Hydroxylgruppen oder Aminogruppen. Bevorzugt sind Hydroxylgruppen, da die Aminogruppen sehr reaktiv sind und das Reaktionsgemisch daher rasch verarbeitet werden muss.

Als Polyisocyanate (i) können alle bei Raumtemperatur flüssigen Polyisocyanate, Mischungen und Prepolymere mit mindestens zwei Isocyanatgruppen eingesetzt werden. In einer Ausführungsform der Erfindung kommen aromatische Polyisocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Polyisocyanate können auch modifiziert sein, beispielsweise durch den Einbau von Isocyanuratgruppen und insbesondere durch den Einbau von Urethangruppen. Die letztgenannten Verbindungen werden durch Umsetzung von Polyisocyanaten mit einem Unterschuss an mit Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 29 Gew.-%.

In einer weiteren Ausführungsform werden aliphatische Polyisocyanate eingesetzt. Bevorzugte aliphatische Polyisocyanate sind Hexamethylendiisocyanat (HDI) und Isophorondiisocyanat (IPDI). Aufgrund der hohen Flüchtigkeit der aliphatischen Polyisocyanate werden diese zumeist in Form ihrer Umsetzungsprodukte, insbesondere als Biurete, Allophanate oder Isocyanurate eingesetzt.

Die Polyolkomponente (ii) enthält ganz allgemein Verbindungen mit mindestens zwei mit Isocyanatgruppen reaktiven Wasserstoffatomen. Dies sind mehrfach funktionelle Alkohole (Polyole), oder - weniger bevorzugt - mehrfach funktionelle Amine.

In dem erfindungsgemäßen Verfahren werden als kompakte Polyurethane solche mit einer hydrophoben Ausrüstung eingesetzt. Die Hydrophobie wird insbesondere durch hydroxylfunktionelle fettchemische Komponenten in der Polyolkomponente (ii) erreicht.

Erfindungsgemäß enthält die Polyolkomponente (ii) des Polyurethans also ein oder mehrere fettchemische Polyole. Solche fettchemischen Polyole sind aus tierischen oder pflanzlichen Fetten und Ölen erhältlich.

Es sind eine Reihe von hydroxylfunktionellen fettchemischen Komponenten bekannt, die als fettchemische Polyole eingesetzt werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure und Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Henkel angeboten.

Vorzugsweise enthält die Polyolkomponente mindestens 50 Gew.-%, insbesondere mindestens 75 Gew.-% der fettchemischen Polyole.

In einer besonders bevorzugten Ausführungsform enthält die Polyolkomponente (ii) neben dem fettchemischen Polyol noch mindestens ein mit Phenol modifiziertes aromatisches Kohlenwasserstoffharz, insbesondere ein Inden-Cumaron-Harz. Diese Polyurethane sowie ihre Aufbaukomponenten weisen eine sehr hohe Hydrophobie auf.

Als mit Phenol modifizierte aromatische Kohlenwasserstoffharze mit einer endständigen Phenolgruppe werden vorzugsweise mit Phenol modifizierte Inden-Cumaron-Harze, besonders bevorzugt technische Gemische von aromatischen Kohlenwasserstoffharzen verwendet, insbesondere solche, die als wesentlichen Bestandteil Verbindungen der allgemeinen Formel (II) 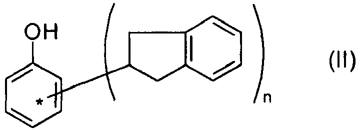 mit n von 2 bis 28 enthalten. Derartige Produkte sind handelsüblich und werden beispielsweise von der Firma Rütgers VFT AG unter dem Handelsnamen NOVARES^{®} angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchemische Polyol und das mit Phenol modifizierte aromatische Kohlenwasserstoffharz, insbesondere das Inden-Cumaron-Harz, in einem Gewichtsverhältnis von 100 : 1 bis 100 : 50 eingesetzt.

Vorzugsweise enthält die Polyolkomponente (ii) insgesamt mindestens 55 Gew.-%, insbesondere mindestens 80 Gew.-% der fettchemischen Polyole und der Phenol-modifizierten aromatischen Kohlenwasserstoffharze.

Gemeinsam mit den genannten Verbindungen kann die Polyolkomponente (ii) weitere Verbindungen mit mindestens zwei aktiven Wasserstoffatomen enthalten. Aufgrund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mg KOH/g, vorzugsweise mindestens 600 mg KOH/g, insbesondere im Bereich von 400 bis 1000 mg KOH/g. Ihre Herstellung erfolgt auf üblichem Wege durch Umsetzung von mindestens dreifach funktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Die Polyisocyanatkomponente (i) und die Polyolkomponente (ii) können weitere übliche Bestandteile enthalten, beispielsweise Katalysatoren und übliche Hilfs- und Zusatzstoffe. Insbesondere sollten der Reaktionsmischung Trockenmittel, beispielsweise Zeolithe, zugesetzt werden, um die Anreicherung von Wasser in den Komponenten und damit ein Aufschäumen der Polyurethane zu vermeiden. Der Zusatz dieser Stoffe erfolgt vorzugsweise zu der Polyolkomponente (ii).- Zur Verbesserung der Langzeitstabilität der Verbundstoffe ist es weiterhin vorteilhaft, Mittel gegen den Angriff von Kleinlebewesen zuzusetzen. Außerdem ist der Zusatz von UV-Stabilisatoren oder Pigmenten vorteilhaft, um eine Versprödung der Formkörper zu vermeiden.

Die eingesetzten Polyurethane können prinzipiell ohne die Anwesenheit von Katalysatoren hergestellt werden. Zur Verbesserung der Aushärtung können Katalysatoren mitverwendet werden. Als Katalysatoren sollten vorzugsweise solche ausgewählt werden, die eine möglichst lange Reaktionszeit bewirken. Dadurch ist es möglich, dass die Reaktionsmischung lange flüssig bleibt. Prinzipiell ist es, wie beschrieben, möglich, auch ganz ohne Katalysator zu arbeiten.

Die Polyisocyanatkomponente (i) wird mit der Polyolkomponente (ii) im Allgemeinen in einem solchen Verhältnis umgesetzt, dass der stöchiometrische Überschuss an Isocyanatgruppen über die mit Isocyanatgruppen reaktiven Gruppen der Polyolkomponente mindestens 5 %, vorzugsweise 5 und 60 % beträgt.

Die hydrophoben Polyurethane zeichnen sich durch eine besonders gute Verarbeitbarkeit aus. So zeigen diese Polyurethane eine besonders gute Haftung, insbesondere auf feuchten Substraten wie nassem Gestein, insbesondere Granitschotter. Die Aushärtung der Polyurethane erfolgt trotz der Anwesenheit von Wasser praktisch kompakt. Die eingesetzten kompakten Polyurethane zeigen auch bei dünnen Schichten eine vollständig kompakte Aushärtung.

Damit sind die Polyurethane, vorzugsweise auf Basis der oben genannten aromatischen Polyisocyanate, hervorragend zur Befestigung von Uferböschungen, insbesondere Dämmen und Deichen, geeignet. Der Verbund zwischen Gestein und Polyurethan ist sehr fest. Weiterhin kommt es, insbesondere bei Einsatz sehr hydrophober Polyurethane, zu praktisch keinem hydrolytischen Abbau der Polyurethane und somit zu einer sehr langen Haltbarkeit der nach dem erfindungsgemäßen Verfahren befestigten Uferböschungen.

Zur Beschichtung von Oberflächen eingesetzte Polyurethane sind vorzugsweise kompakt und transparent, um eine optische Beeinträchtigung der Oberflächen insbesondere bei Fassaden von Gebäuden zu vermeiden. Aus dem gleichen Grund werden hierfür vorzugsweise Polyurethane auf Basis eines aliphatischen Polyisocyanats eingesetzt, da diese im Gegensatz zu Polyurethanen aus Basis von aromatischen Polyisocyanaten im Laufe der Zeit nicht vergilben.

Nachstehend werden einige bevorzugte Anwendungsgebiete des erfindungsgemäßen Verfahrens beschrieben.

Mit dem erfindungsgemäßen Verfahren können lose mineralische Partikel wie Steine zu einem Verbund verbunden werden. Dabei können der flüssige Kunststoff bzw. die flüssigen Ausgangskomponenten des 2-Komponenten-Kunststoffs mit Steinen vermischt und in einem zweiten Schritt diese Mischung auf einen zu befestigenden Uferabschnitt oder an zumindest teilweise in bewegten Gewässern befindlichen Bauwerken, wie Stütz- und Konstruktionselemente ausgebracht werden oder auch die Mischung in eine Form gegeben werden, und der Kunststoff kann anschließend aushärten.

Der Verbund aus dem Kunststoff und den losen Steinen kann hergestellt werden durch
a) Mischung der losen Steine mit den flüssigen Ausgangskomponenten des Kunststoffs in einem Mischer.
b) Ausbringen dieser Mischung aus dem Mischer,
c) Aushärten des Kunststoffs.

Bei den losen Steinen handelt es sich bevorzugt um Schotter, besonders bevorzugt um Granitschotter. Die Steine haben eine Größe von 1 bis 50 cm, bevorzugt von 1 bis 20 cm, besonders bevorzugt von 2 bis 15 cm, insbesondere von 2,5 bis 6,5 cm.

Als Mischer für die Vermischung der losen Steine mit den Ausgangskomponenten des Kunststoffs können prinzipiell alle Arten von Mischern eingesetzt werden, mit denen eine weitgehend vollständige Benetzung der Steine mit den flüssigen Ausgangskomponenten des Kunststoffs möglich ist. Als besonders geeignet haben sich Mischer erwiesen, die aus einem offenen Behälter, beispielsweise einer Trommel, die vorzugsweise mit Einbauten versehen ist, bestehen. Zur Vermischung kann entweder die Trommel in Drehung versetzt oder können die Einbauten bewegt werden.

Derartige Mischer sind bekannt und werden beispielsweise in der Bauindustrie zur Herstellung von Betonmischungen eingesetzt.

In einer Ausführungsform des erfindungsgemäßen Verfahrens erfolgt die Mischung der Steine mit den flüssigen Ausgangskomponenten des Kunststoffs kontinuierlich. Dazu werden die Steine und die flüssigen Ausgangskomponenten des Kunststoffs kontinuierlich in den Mischer eingetragen und die benetzten Steine kontinuierlich ausgetragen. Bei dieser Verfahrensweise muss darauf geachtet werden, dass die Einsatzstoffe so lange im Mischer verbleiben, dass eine ausreichende Benetzung der Steine erfolgen kann. Zweckmäßigerweise kann eine solche Mischvorrichtung in einer solchen Geschwindigkeit an den zu befestigenden Abschnitten entlang bewegt werden, dass die mit den flüssigen Ausgangskomponenten des Kunststoffs benetzten Steine in einer solchen Menge aus dem Mischer ausgetragen werden, wie sie zur Befestigung benötigt werden. Es ist auch möglich, die kontinuierliche Mischeinrichtung stationär zu betreiben und die aus dem Mischer ausgetragenen benetzten Steine zu dem gewünschten Ort zu transportieren.

In einer weiteren Ausführungsform der kontinuierlichen Ausgestaltung des erfindungsgemäßen Verfahrens kann der Mischer eine rotierende Trommel sein, in die kontinuierlich Steine eingebracht werden. Diese Trommel ist mit Düsen bestückt, die kontinuierlich die Ausgangskomponenten des Kunststoffes auf den Steinen verteilen. Die Rotation der Trommel sorgt hierbei für eine gute Durchmischung von Kunststoff und Steinen. Durch eine Öffnung am Ende der Trommel werden dann kontinuierlich Kunststoff/ Stein-Verbunde ausgetragen. Die rotierende Trommel kann dabei horizontal, aber auch in verschiedenen Winkeln geneigt sein, um den Austrag zu fördern.

In einer weiteren Ausführungsform des kontinuierlichen Verfahrens werden die Steine kontinuierlich auf einem Förderband, welches durch einen Tunnel gefahren wird, transportiert. Dieser verfügt über Öffnungen, über die kontinuierlich die Ausgangsstoffe des Kunststoffes auf die Steine ausgetragen werden. Am Ende des Förderbandes fallen die Steine dann in eine offene Mischtrommel, die mit einstellbarer Fördergeschwindigkeit den Verbund austrägt.

Die Dicke der Schicht aus dem Verbundstoff liegt vorzugsweise bei mindestens 10 cm, da bei geringeren Dicken die mechanische Stabilität häufig nicht ausreichend ist. Die maximale Dicke ist abhängig von den örtlichen Gegebenheiten und kann beispielsweise bis zu 5 Metern betragen.

Bei der Herstellung von Formkörpern wird die Mischung der losen Steine mit den flüssigen Ausgangskomponenten des Kunststoffs nach dem Vermischen in eine vorzugsweise nach oben offene Form gegeben, wo der Kunststoff aushärtet. Der so entstandene Verbundkörper kann auf das Ufer aufgebracht werden.

Die Zeit für die Mischung sollte mindestens so bemessen sein, dass die Steine möglichst vollständig mit der flüssigen Mischung benetzt sind, und höchstens so lange, dass der Kunststoff noch nicht ausgehärtet ist.

Es ist auch möglich, Steine zu verwenden, die an ihrer Oberfläche lose anhaftende Verunreinigungen aufweisen. Durch die mechanische Beanspruchung beim Mischvorgang werden diese Verunreinigungen von der Oberfläche der Steine entfernt und können somit nicht mehr die Haftung der Steine aneinander beeinträchtigen.

In einer bevorzugten Ausführungsform des erfindungsgemäßen Verfahrens kann auf die Oberfläche des Formkörpers Sand aufgebracht werden. Damit der Sand auf der Oberfläche haftet, sollte das Aufbringen des Sandes vor der vollständigen Aushärtung des Kunststoffs erfolgen. Es können beliebige Sande eingesetzt werden. Dabei kann es sich um natürlichen Sand oder künstlichen Sand, wie Hüttensand oder Schlackenbrechsand handeln. In einer bevorzugten Ausführungsform wird Quarzsand eingesetzt.

Die durch den Sand bewirkte raue Oberfläche begünstigt die Ansiedlung von Lebewesen, wie Pflanzen und Moosen auf den ausgebrachten Formkörpern. Dies kann beispielsweise beim Ausbringen der Formkörper in Naturschutzgebieten vorteilhaft sein.

Das Mengenverhältnis von Kunststoff zu Stein wird mindestens so gewählt, dass eine ausreichende Festigkeit des Verbunds gewährleistet ist. Die genauen Mengen hängen beispielsweise auch von der Größe der mineralischen Materialien sowie der Stärke und der Beanspruchung der Formkörper an den jeweiligen Uferabschnitten ab.

Eine weitere Anwendungsmöglichkeit des erfindungsgemäßen Verfahrens ist der Schutz von Bauwerken, die sich zumindest teilweise in bewegtem Wasser befinden, vor der so genannten Auskolkung. Darunter versteht man eine örtliche Vertiefung des Grunds der strömenden Gewässer, insbesondere der Flusssohle zumeist bei starker Wasserströmung in Engstrecken, häufig auch an Brückenpfeilern, wo infolge des Staus und des nachfolgenden stärkeren Gefälles durch rotierende Strömung, die so genannte Wasserwalze, die Fundamente angegriffen werden. Der gleiche Effekt findet sich beispielsweise bei Stützoder Brückenpfeilern von See-, Wasser- und/oder Schiffsbrücken, Hafenanlagen, wie schwimmenden, festen Molen, Bootsanlegern, oder Auswasserungsanlagen, bei Kaianlagen, Bootshäusern, Ufermauern, Bohrinseln, Off-Shore-Anlagen, wie Windenergieanlagen, Seezeichen, Leuchttürmen, oder Messplattformen, Wasserkraftwerken, Tunneln oder Pfählungen.

Durch das offene Lückensystem der Verbundkörper, das die hydrodynamische Energie aufnehmen kann, somit die Wellen- und Strömungsenergie bricht und infolgedessen zu deutlich geringerer Auskolkung führt, können Schäden an Bauwerken vermieden und die Tragfähigkeit von Stütz- und Konstruktionselementen erhöht werden.

Die mineralischen Materialien können Wände von Bauwerken sein, die in einem ersten Schritt oberflächlich gereinigt und in einem zweiten Schritt mit dem 2-Komponenten-Kunststoff beschichtet werden.

Dabei wird die Oberfläche zunächst vorzugsweise durch Wasser- oder insbesondere Sandstrahlen von Verunreinigungen befreit und danach das erfindungsgemäße hydrophobe Polyurethan oder Epoxyharz auf die Oberfläche aufgebracht.

Vorzugsweise wird dabei ein transparentes, kompaktes hydrophobes Polyurethan auf Basis eines aliphatischen Polyisocyanats eingesetzt.

Der Auftrag des Polyurethans auf die Oberfläche kann auf übliche und bekannte Weise erfolgen, vorzugsweise durch Aufsprühen. Die Dicke der Polyurethanschicht beträgt vorzugsweise 0,5 mm bis 1 cm, insbesondere 0,5 mm bis 3 mm.

Die erfindungsgemäßen Harze zeichnen sich durch eine bessere Benetzung und eine bessere Haftung auf den mineralischen Oberflächen aus. Insbesondere werden auch Oberflächen von Materialien mit hoher Oberflächenspannung wie Granit benetzt. Die Harze sind gegen Feuchtigkeit auf den mineralischen Oberflächen unempfindlich. Weiterhin ist zum Aushärten die Gegenwart eines zusätzlichen Katalysators nicht unbedingt erforderlich.

Die mineralischen Materialien können Teile von Bauwerken, Dämmen und Deichen sein, und in diesen Teilen vorhandene Risse und Hohlräume können mit den 2-Komponenten-Kunstoffharzen ausgefüllt werden.

Beispielsweise kann das erfindungsgemäße Verfahren zur Stabilisierung von Dämmen und Deichen eingesetzt werden, wobei in den Dämmen und Deichen vorhandene Risse oder Hohlräume mit einem hydrophoben Polyurethan ausgefüllt werden.

Bei dem hydrophoben Polyurethan handelt es sich vorzugsweise um ein kompaktes Polyurethan. Es ist jedoch auch möglich, einen hydrophoben Polyurethanschaum mit einer Dichte im Bereich zwischen 200 und 1000 kg/m³ einzusetzen. Bei einer höheren Dichte ist die mechanische Stabilität der Schäume häufig nicht mehr gewährleistet.

Als Polyisocyanatkomponente (i) können dabei aliphatische Isocyanate, beispielsweise Hexamethylendiisocyanat (HDI), Isophorondiisocyanat (IPDI) oder deren Umsetzungsprodukte mit sich selbst, beispielsweise unter Einbau von Uretdion- oder Isocyanuratgruppen, eingesetzt werden. Vorzugsweise kommen aber aromatische Polyisocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Polyisocyanate können auch modifiziert sein, beispielsweise durch den Einbau von Isocyanuratgruppen und insbesondere durch den Einbau von Ur-ethangruppen. Die letztgenannten Verbindungen werden durch Umsetzung von Polyisocyanaten mit einem Unterschuss an Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 29 Gew.-%.

Zur Sanierung von beschädigten Dämmen und Deichen werden die flüssigen Ausgangskomponenten der Polyurethane, also die Polyisocyanatkomponente (i) und die Pololkomponente (ii), dort aufgebracht, wo sich beschädigte Stelle befindet, wo sie zum Polyurethan aushärten.

Bei Schäden an der Oberfläche erfolgt das Ausbringen der flüssigen Ausgangskomponenten der Polyurethane, je nach der benötigten Menge, im Handansatz, über einen Mischkopf oder mittels einer Sprühpistole. Zum Ausfüllen von Hohlräumen im Innern der Dämme oder Deiche können die flüssigen Ausgangskomponenten der Polyurethane beispielsweise mittels eines Mischkopfs und einer Lanze in das Innere der Deiche eingebracht werden.

Die Erfindung wird durch die nachstehenden Beispiele näher erläutert.

### Beispiele

| | |
|---|---|
| Polyol: | Hydroxylfunktionelle fettchemische Komponente auf Basis von Rizinusöl, Umsetzungsprodukt von Rizinusöl mit einem Keton-Formaldehyd-Harz, OH-Zahl 170 |
| Isocyanat: | Polymeres Diisocyanatodiphenylmethan (PMDI) |
| Zusatzmittel 1: | Siliconentschäumer |
| Zusatzmittel 2: | N-(3-Trimethoxysilyl)propyl)ethylendiamin |

### Vergleichsbeispiel

93 Gew.-Teile Polyol, 6,95 Gew.-Teile eines zeolithischen Trockenmittels 50 %-ig in Rizinusöl und 0,05 Gew.-Teile eines Zusatzmittels 1 wurden zu einer Polyolkomponente vermischt. Zu dieser fertigen Polyolkomponente wurden 83,7 Gew.-Teile Isocyanat zugegeben und die Komponenten intensiv vermischt. Aus der Mischung der Komponenten wurde eine 2 mm-Platte hergestellt um Shore-D, Reißdehnung, Zugfestigkeit und Glasübergangstemperatur Tg zu analysieren. Außerdem wurden aus dem Polyurethanharz Verbundkörper mit Basaltschotter hergestellt. Dazu wurde Basaltschotter in eine offene Form mit den Abmessungen 15 cm x 15 cm x 15 cm eingetragen. Die flüssige Mischung der Komponenten wurde gleichmäßig mittels einer Gießkanne auf dem Basaltschotter verteilt. Das flüssige Reaktionsgemisch mit einer sehr langen Reaktionszeit benetzte das Gestein und durchtränkte die gesamte Schotteranlage. Das kompakte Polyurethan härtete blasenfrei aus und ergab einen festen Verbund mit dem Granitschotter. Die Messergebnisse sind in der Tabelle zusammengefasst.

### Beispiel (erfindungsgemäß)

93 Gew.-Teile Polyol, 6,85 Gew.-Teile eines zeolithischen Trockenmittels 50 %-ig in Rizinusöl und 0,05 Gew.-Teile eines Zusatzmittels 1 wurden zu einer Polyolkomponente vermischt. Diesem Gemisch wurden 0,1 Gew.-Teile Zusatzmittel 2 zugesetzt und damit die Polyolkomponente vervollständigt. Zu dieser fertigen Polyolkomponente wurden 83,7 Gew.-Teile Isocyanat zugegeben und die Komponenten intensiv vermischt. Aus der Mischung der Komponenten wurde eine 2 mm-Platte hergestellt um Shore-D, Reißdehnung, Zugfestigkeit und Glasübergangstemperatur Tg zu analysieren. Außerdem wurden aus dem Polyurethanharz Verbundkörper mit Basaltschotter hergestellt. Dazu wurde Basaltschotter in eine offene Form mit den Abmessungen 15 cm x 15 cm x 15 cm eingetragen. Die flüssige Mischung der Komponenten wurde gleichmäßig mittels einer Gießkanne auf dem Basaltschotter verteilt. Das flüssige Reaktionsgemisch mit einer sehr langen Reaktionszeit benetzte das Gestein und durchtränkte die gesamte Schotteranlage. Das kompakte Polyurethan härtete blasenfrei aus und ergab einen festen Verbund mit dem Granitschotter. Die Messergebnisse sind in der Tabelle zusammengefasst.

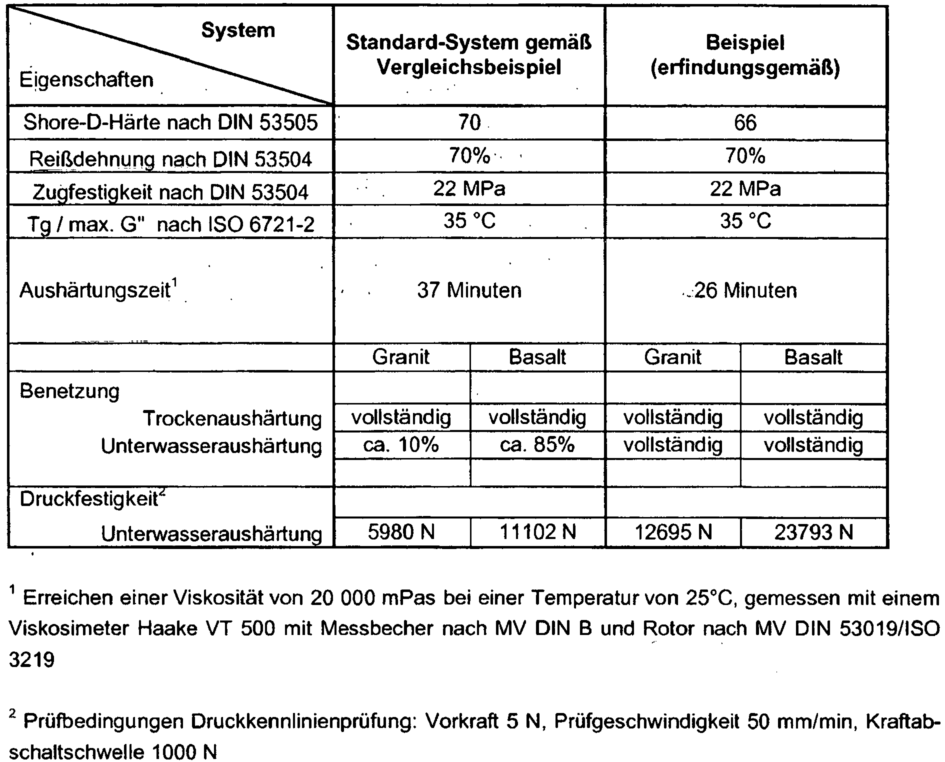

## Patentansprüche

1. Verfahren zur Beschichtung, zum Verkleben oder Verbinden von Oberflächen mineralischer Materialien mit einem 2-Komponenten-Kunststoffharz durch Aufbringen des Kunststoffharzes auf die Oberfläche oder Verbinden der Oberflächen der mineralischen Materialien mit dem Kunststoffharz und Aushärten lassen des Kunststoffharzes, wobei das Kunststoffharz 0,01 bis 10 Gew.% einer oder mehrerer Hydroxy aminosilanverbindungen oder Alkoxyaminosilanverbindungen der allgemeinen Formel (I) 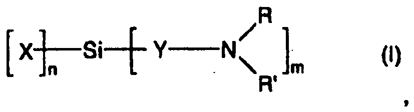 worin bedeuten:
X unabhängig voneinander OH, CH₃, O[CH₂]ₚCH₃;
Y [CH₂]ₜ, [CH₂]ᵣNH[CH₂]ₛ;
R, R' H, [CH₂]ₜCH₃;
t 0 - 10;
n 1 - 3;
p 0 - 5;
m 4 - n;
r, s unabhängig voneinander 1 -10,
enthält, **dadurch gekennzeichnet, dass** das 2-Komponenten-Kunstsoffharz ein hydrophobes Polyurethanharz ist, das durch Vermischen einer Polyisocyanatkomponente (i) mit einer Polyolkomponente (ii) erhältlich ist, wobei die Polyolkomponente (ii) eines oder mehrere fettchemische Polyole enthält, welche aus tierischen oder pflanzlichen Fetten und Ölen erhältlich sind, und wobei die Verbindung der allgemeinen Formel (I), wean es sich um eine Alkoxyaminosilanverbindung handelt, in der Polyolkomponente (ii) enthalten ist.

2. Verfahren nach Anspruch 1, **dadurch gekennzeichnet, dass** es sich bei der Alkoxyaminosilanverbindung (I) um eine Trihydroxyaminosilanverbindung oder Trialkoxyaminosilanverbindung handelt, wobei in Formel (I) X = OH oder O[CH₂]ₚCH₃ und p = 0, 1 bedeuten.

3. Verfahren nach Anspruch 1 oder 2, **dadurch gekennzeichnet, dass** es sich bei der Alkoxyaminosilanverbindung (I) um eine Alkoxydiaminosilanverbindung handelt, wobei in Formel (I) Y = [CH₂]ᵣNH[CH₂]ₛ und r, s, gleich oder verschieden, 1 oder 2 bedeuten.

4. Verfahren nach einem der Ansprüche 1 bis 3, **dadurch gekennzeichnet, dass** die Polyolkomponente (ii) ein mit Phenol modifiziertes aromatisches Kohlenwasserstoffharz enthält.

5. Verfahren nach einem der Ansprüche 1 bis 4, **dadurch gekennzeichnet, dass** das Kunststoffharz unter Wasser aushärtet

6. Verfahren nach einem der Ansprüche 1 bis 5, **dadurch gekennzeichnet, dass** die mineralischen Materialien lose Steine sind, die zu einem Verbund verklebt werden.

7. Verfahren nach einem der Ansprüche 1 bis 6, **dadurch gekennzeichnet, dass** die mineralischen Materialien Wände von Bauwerken sind, die in einem ersten Schritt oberflächlich gereinigt und in einem zweiten Schritt mit dem 2-Komponenten-Kunststoff beschichtet werden.

8. Verfahren nach einem der Ansprüche 1 bis 7, **dadurch gekennzeichnet, dass** die mineralischen Materialien Teile von Bauwerken, Dämmen und Deichen sind, und in diesen Teilen vorhandene Risse und Hohlräume mit den 2-Komponenten-Kunstoffharzen ausgefüllt werden.

## Claims

1. A process for coating, for adhesive bonding or for binding of surfaces of mineral materials with a 2-component plastic resin by applying the plastic resin to the surface or binding the surfaces of the mineral materials with the plastic resin and allowing the plastic resin to cure, the plastic resin comprising from 0.01 to 10% by weight of one or more hydroxyaminosilane compounds or alkoxyaminosilane compounds of the general formula (I) 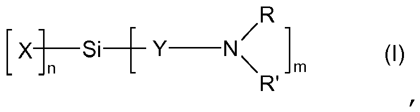 in which:
X independently of one another, are OH, CH₃, O[CH₂]ₚCH₃ ;
Y is [CH₂]ₜ, [CH₂]ᵣNH[CH₂]ₛ;
R, R' are H, [CH₂]ₜCH₃ ;
t is 0 - 10;
n is 1 - 3;
p is 0 - 5;
m is 4 - n;
r, s independently of one another, are 1 -10,
wherein the 2-component plastic resin is a hydrophobic polyurethane resin which is obtainable by mixing a polyisocyanate component (i) with a polyol component (ii), the polyol component (ii) comprising one or more polyols which are known from fat chemistry and are obtainable from animal or vegetable fats and oils, and the compound of the general formula (I), if it is an alkoxyaminosilane compound, being present in the polyol component (ii).

2. The process according to claim 1, wherein the alkoxyaminosilane compound (I) is a trihydroxyaminosilane compound or trialkoxyaminosilane compound, X = OH or O[CH₂]ₚCH₃ and p being 0 or 1 in formula (I).

3. The process according to claim 1 or 2, wherein the alkoxyaminosilane compound (I) is an alkoxydiaminosilane compound, Y being [CH₂]ᵣNH[CH₂]ₛ and r, s being identical or different and being 1 or 2 in formula (I).

4. The process according to any of claims 1 to 3, wherein the polyol component (ii) comprises a phenol-modified aromatic hydrocarbon resin.

5. The process according to any of claims 1 to 4, wherein the plastic resin cures under water.

6. The process according to any of claims 1 to 5, wherein the mineral materials are loose stones, which are adhesively bonded to give a composite.

7. The process according to any of claims 1 to 6, wherein the mineral materials are walls of structures which are superficially cleaned in a first step and coated with the 2-component plastic in a second step.

8. The process according to any of claims 1 to 7, wherein the mineral materials are parts of structures, dams and levees, and cracks and cavities present in these parts are filled with the 2-component plastic resins.

## Revendications

1. Procédé de revêtement, de collage ou de liaison de surfaces de matériaux minéraux avec une résine plastique bicomposante par application de la résine plastique sur la surface ou liaison des surfaces des matériaux minéraux avec la résine plastique et durcissement de la résine plastique, la résine plastique contenant 0,01 à 10 % en poids d'un ou de plusieurs composés d'hydroxyaminosilane ou composés d'alcoxyaminosilane de formule générale (I) 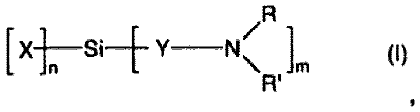 dans laquelle
les X signifient indépendamment les uns des autres OH, CH₃, O[ CH₂]ₚCH₃ ;
les Y signifient [CH₂]ₜ, [CH₂]ᵣNH[CH₂]ₛ ;
R, R' signifient H, [CH₂]ₜCH₃ ;
t signifie 0 à 10 ;
n signifie 1 à 3 ;
p signifie 0 à 5 ;
m signifie 4 à n ;
r, s signifient indépendamment l'un de l'autre 1 à 10,
**caractérisé en ce que** la résine plastique bicomposante est une résine de polyuréthane hydrophobe, qui peut être obtenue par mélange d'un composant polyisocyanate (i) avec un composant polyol (ii), le composant polyol (ii) contenant un ou plusieurs polyols chimiquement gras, qui peuvent être obtenus à partir de matières grasses et d'huiles animales ou végétales, et le composé de formule générale (I), lorsqu'il s'agit d'un composé d'alcoxyaminosilane, étant contenu dans le composant polyol (ii).

2. Procédé selon la revendication 1, **caractérisé en ce que** le composé d'alcoxyaminosilane (I) est un composé de trihydroxyaminosilane ou un composé de trialcoxyaminosilane, avec X = OH ou O[CH₂]ₚCH₃ et p = 0, 1 dans la formule (I).

3. Procédé selon la revendication 1 ou 2, **caractérisé en ce que** le composé d'alcoxyaminosilane (I) est un composé d'alcoxydiaminosilane, avec Y = [CH₂]ᵣNH[CH₂]ₛ, et r, s étant identiques ou différents et signifiant 1 ou 2 dans la formule (I).

4. Procédé selon l'une quelconque des revendications 1 à 3, **caractérisé en ce que** le composant polyol (ii) contient une résine hydrocarbonée aromatique modifiée avec du phénol.

5. Procédé selon l'une quelconque des revendications 1 à 4, **caractérisé en ce que** la résine plastique durcit sous l'eau.

6. Procédé selon l'une quelconque des revendications 1 à 5, **caractérisé en ce que** les matériaux minéraux sont des pierres en vrac, qui sont collées en un composite.

7. Procédé selon l'une quelconque des revendications 1 à 6, **caractérisé en ce que** les matériaux minéraux sont des parois d'édifices, qui lors d'une première étape sont nettoyées en surface et, lors d'une seconde étape, sont revêtues avec le plastique bicomposant.

8. Procédé selon l'une quelconque des revendications 1 à 7, **caractérisé en ce que** les matériaux minéraux sont des parties d'édifices, de barrages et de digues, et des fissures et cavités présentes dans ces parties sont remplies avec les résines plastiques bicomposantes.
